# EUROPEAN PATENT SPECIFICATION

(11) **EP 3 062 556 B1**
(45) Date of publication and mention of the grant of the patent: **01.08.2018**
(21) Application number: 15156310.3
(22) Date of filing: 24.02.2015
(51) Int. Cl.: H04W 36/00

(54) **APPARATUSES, METHODS AND COMPUTER PROGRAMS FOR A BACKHAUL MODEM AND A BASE STATION TRANSCEIVER OF A RELAY STATION TRANSCEIVER**
VORRICHTUNGEN, VERFAHREN UND COMPUTERPROGRAMME FÜR EIN BACKHAUL-MODEM UND EINEN BASISSTATIONS-SENDER-EMPFÄNGER EINES SENDER-EMPFÄNGERS EINER RELAISSTATION
APPAREILS, PROCÉDÉS ET PROGRAMMES INFORMATIQUES POUR UN MODEM DE COLLECTE ET UN ÉMETTEUR-RÉCEPTEUR DE STATION DE BASE D'UN ÉMETTEUR-RÉCEPTEUR DE STATION DE RELAIS

(43) Date of publication of application: 31.08.2016
(73) Proprietor: Nash Innovations GmbH, 90491 Nürnberg (DE)
(72) Inventor: Wagner, Karl-Ludwig, 90552 Röthenbach (DE)
(74) Representative: 2SPL Patentanwälte PartG mbB

(56) References cited:
- EP-A1- 2 306 766
- WO-A1-2012/136254
- WO-A1-2013/023171
- "3rd Generation Partnership Project; Technical Specification Group Radio Access Network; Evolved Universal Terrestrial Radio Access (E-UTRA); Study on mobile relay (Release 12)", 3GPP DRAFT; 36836-C00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 27 June 2014 (2014-06-27), XP050907468, Retrieved from the Internet: URL:http://www.3gpp.org/ftp/Specs/2014-12/ Rel-12/36_series/ [retrieved on 2014-06-27]
- INSTITUTE FOR INFORMATION INDUSTRY (III): "Performance comparison for mobile relay architecture options", 3GPP DRAFT; R3-120752, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. San Jose Del Cabo, Mexico; 20120326 - 20120330 2 April 2012 (2012-04-02), XP050669103, Retrieved from the Internet: URL:http://www.3gpp.org/ftp/tsg_ran/WG3_Iu /TSGR3_75bis/Docs/ [retrieved on 2012-04-02]

## Description

### Technical Field

Embodiments relate to apparatuses, methods and computer programs for a backhaul modem and a base station transceiver of a relay station transceiver, and more particularly, but not exclusively to preventing a backhaul modem of a relay station transceiver from associating with a base station transceiver of the relay station transceiver.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to conventional phones, this application mix leads to a number of new characteristics. For example, highly dynamic load statistics result, where the average load is increasing. Moreover, the number of networks for voice and data access is also increasing, therewith, roaming options between these networks become available when multiple network layers overlap or at network boundaries, respectively.

Network planning and deployment in cellular communication systems is based on fixed, stationary base stations and may further take into account mobile relay station transceivers, which may reside in vehicles, e.g. cars, buses, trains, ships, planes, etc. As demands for digital services are increasing users' expectation of service availability also increases such that mobile access points experience a wider deployment, especially in mass transportation. Mobile devices, e.g. smartphones, tablets, computers, inside vehicles to consume mobile broadband data or voice services, may perceive quality-of-service degradations if the mobile relay station transceiver experiences degradation on the backhaul connection or link.

3GPP TR 36.836 V12.0.0 describes a study on mobile relay stations. The document covers the study on mobile relay for E-UTRA. The objective therein is to first identify scenario(s) and requirements and then identify the key properties of mobile relays and assess the benefits of mobile relays over existing solutions in fast-moving environments. Document EP 2 306 766 A1 relates to link quality determination in scenarios involving relay nodes. The quality of access link and the quality of the backhaul link are taken into account to determine an overall link criterion, which is used for cell ranking decisions.

### Summary

The present invention relates to apparatuses, methods and a computer programs for a backhaul modem and a base station transceiver of a relay station transceiver according to the features of the independent claims. Embodiments may prevent a backhaul modem of a relay station transceiver from associating with a cell generated by the same base station transceiver of the relay station transceiver. Embodiments may enhance system stability and service quality as an association of a backhaul modem of a relay station transceiver with a cell generated by the same base station transceiver may result in service failure.

The embodiments and examples of the following summary and description which are not covered by the appended claims are considered as not being part of the present invention. Embodiments provide an apparatus for a backhaul modem of a relay station transceiver. The relay station transceiver comprises the backhaul modem for communicating with one or more cells of a mobile communication system and a base station transceiver for generating at least one cell of the mobile communication system for communicating with one or more mobile transceivers. The apparatus comprises an interface to communicate with the base station transceiver. The apparatus further comprises a control module to control a set of cells of the mobile communication system the backhaul modem associates with. The control module is further configured to prevent associating with the at least one cell of the base station transceiver by communicating with the base station transceiver using the interface.

Embodiments provide an apparatus for a base station transceiver of a relay station transceiver. The relay station transceiver comprises a backhaul modem for communicating with one or more cells of a mobile communication system and the base station transceiver for generating at least one cell of the mobile communication system for communicating with one or more mobile transceivers. The apparatus comprises an interface to communicate with the backhaul modem. The apparatus further comprises a control module to control a set of transceivers of the mobile communication system associating with the at least one cell generated by the base station transceiver. The control module is further configured to prevent the at least one cell generated by the base station transceiver from associating with the backhaul modem by communicating with the backhaul modem using the interface. In embodiments the communication between the backhaul modem and the base station transceiver can be used to reduce or avoid handover attempts of the backhaul modem to a cell generated by the base station transceiver.

In some embodiments, the control module of the backhaul modem apparatus may be configured to receive information related to an identification of the at least one cell generated by the base station transceiver from the base station transceiver through the interface. Correspondingly, the control module of the base station transceiver apparatus may be configured to provide information related to an identification of the at least one cell generated by the base station transceiver to the backhaul modem through the interface. Embodiments may provide the advantage that the base station transceiver apparatus can provide cell identification information to the backhaul modem apparatus, which may then be enabled to prevent associating with this cell identification. In embodiments the information related to the identification may, for example, correspond to one or more elements of the group of information related to a cell identification, information related to a radio access technology, information related to an absolute radio frequency channel number, information related to a primary synchronization channel, information related to physical cell identification, information related to a location area identity, information related to a tracking area identity, information related to a routing area identity, information related to a cell global identity, and/or information related to a base station identity code.

In some embodiments, the control module of the backhaul modem may be configured to provide information related to an identification of the backhaul modem to the base station transceiver through the interface. Correspondingly, the control module of the base station transceiver apparatus may be configured to receive information related to an identification of the backhaul modem from the backhaul modem through the interface. Embodiments may provide the advantage that the base station transceiver apparatus can receive modem identification information from the backhaul modem apparatus. The base station transceiver apparatus may then be enabled to prevent associating with the backhaul modem. The information related to the identification may then correspond to one or more elements of the group of information related to an international mobile subscriber identity, information related to an international mobile station equipment identity, information related to a temporary mobile subscriber identity, information related to a packet temporary mobile subscriber identity, and/or information related to a radio network temporary identifier.

In further embodiments, the respective control module, be it on the backhaul modem side or on the base station transceiver side, may be configured to prevent a handover of the backhaul modem to the at least one cell of the base station transceiver. Embodiments may enable a reduction or even a prevention of handovers of the backhaul modem to a cell generated by the base station transceiver of the same relay station transceiver. Furthermore, in some embodiments the respective control module, be it on the backhaul modem side or on the base station transceiver side, may be configured to prevent a cell reselection of the backhaul modem to the at least one cell of the base station transceiver. Embodiments may enable a reduction or even a prevention of cell re-selections of the backhaul modem to a cell generated by a base station transceiver of the same relay station transceiver.

In some embodiments, the control module of the backhaul modem apparatus may be configured to maintain information related to a blacklist of cells the backhaul modem is prevented from associating with. In some embodiments, the control module of the base station transceiver apparatus may be configured to maintain information related to a blacklist of transceivers the at least one cell is prevented from associating with. Therewith an efficient administration of cells to be excluded for association may be created by embodiments.

Embodiments provide a method for a backhaul modem of a relay station transceiver. The relay station transceiver comprises the backhaul modem for communicating with one or more cells of a mobile communication system and a base station transceiver for generating at least one cell of the mobile communication system for communicating with one or more mobile transceivers. The method comprises communicating with the base station transceiver and controlling a set of cells of the mobile communication system the backhaul modem associates with. The method further comprises preventing associating with the at least one cell of the base station transceiver by communicating with the base station transceiver.

Embodiments further provide a method for a base station transceiver of a relay station transceiver. The relay station transceiver comprises a backhaul modem for communicating with one or more cells of a mobile communication system and the base station transceiver for generating at least one cell of the mobile communication system for communicating with one or more mobile transceivers. The method comprises communicating with the backhaul modem and controlling a set of transceivers of the mobile communication system associating with the at least one cell generated by the base station transceiver. The method further comprises preventing the at least one cell generated by the base station transceiver from associating with the backhaul modem by communicating with the backhaul modem.

Embodiments further provide a computer program having a program code for performing one or more of the above described methods, when the computer program is executed on a computer, processor, or programmable hardware. A further embodiment is a computer readable storage medium storing instructions which, when executed by a computer, processor, or programmable hardware, cause the computer to implement one of the methods described herein.

### Brief description of the figures

Some other features or aspects will be described using the following non-limiting embodiments of apparatuses and/or methods and/or computer programs and/or computer program products by way of example only, and with reference to the accompanying figures, in which
Fig. 1 illustrates a block diagram of an embodiment of an apparatus for backhaul modem and an embodiment of an apparatus for a base station transceiver;
Fig. 2 shows further embodiments in a network scenario;
Fig. 3 shows an embodiment of a mobile relay station transceiver in a vehicle;
Fig. 4 shows a block diagram of a flow chart of an embodiment of a method for a backhaul modem; and
Fig. 5 shows a block diagram of a flow chart of an embodiment of a method for a base station transceiver.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.,* "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Embodiments may provide a method to prevent a backhaul modem from selecting a mobile cell located within a car, bus, train or other transportation devices for which it shall provide the backhaul link.

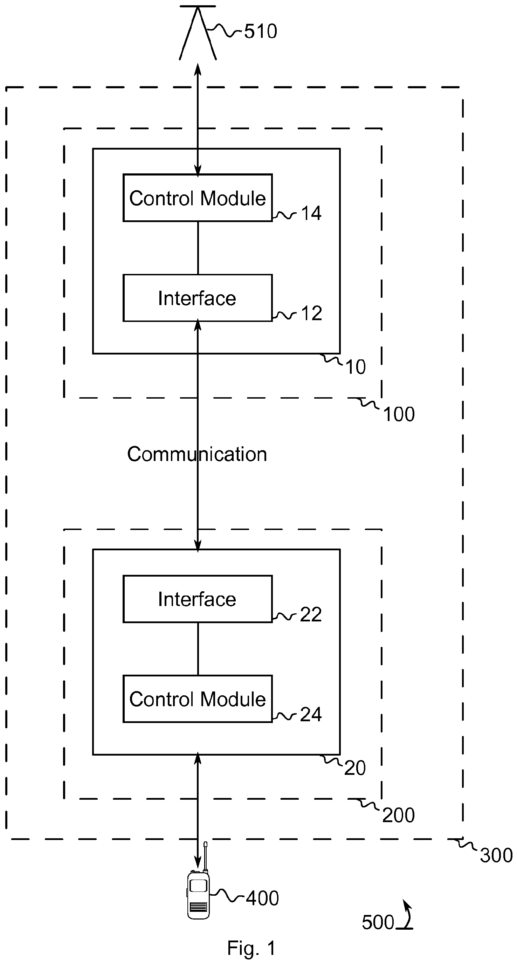

Fig. 1 illustrates a block diagram of an embodiment of an apparatus 10 for a backhaul modem 100 and an embodiment of an apparatus 20 for a base station transceiver 200. In the following Figs. optional components or features are shown in broke lines. Embodiments hence further provide a backhaul modem 100 comprising an embodiment of the apparatus 10 and/or a base station transceiver 200 comprising an embodiment of the apparatus 20. Furthermore, embodiments provide a relay station transceiver 300 comprising an embodiment of the backhaul modem 100 and/or an embodiment of the base station transceiver 200. Embodiments of a backhaul modem 100, a base station transceiver 200 and a relay station transceiver 300 are also shown in Fig. 1 by means of the optional broken line boxes. The relay station transceiver 300 comprises the backhaul modem 100 for communicating with one or more cells 510 of a mobile communication system 500 and a base station transceiver 200 for generating at least one cell of the mobile communication system 500 for communicating with one or more mobile transceivers 400.

The backhaul modem apparatus 10 comprises an interface 12 to communicate with the base station transceiver 200. The backhaul modem apparatus 10 further comprises a control module 14, which is coupled to the interface 12, to control a set of cells of the mobile communication system 500 the backhaul modem 100 associates with. The control module 14 is further configured to prevent associating with the at least one cell of the base station transceiver 200 by communicating with the base station transceiver 200 using the interface 12.

Fig. 1 further illustrates an embodiment of an apparatus 20 for the base station transceiver 200 of the relay station transceiver 300. The apparatus 20 comprises an interface 22 to communicate with the backhaul modem 100 and a control module 24, which is coupled to the interface 22, to control a set of transceivers of the mobile communication system 500 associating with the at least one cell generated by the base station transceiver 200. The control module 24 is further configured to prevent the at least one cell generated by the base station transceiver 200 from associating with the backhaul modem 100 by communicating with the backhaul modem 100 using the interface 12.

In embodiments the mobile communication system 500 may, for example, correspond to one of the mobile communication systems standardized by the 3^{rd} Generation Partnership Project (3GPP), e.g. Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers, relay station transceivers and base station transceivers. The relay station transceivers and base station transceivers can be composed of one or more central units and one or more remote units.

A mobile transceiver may correspond to a smartphone, a cell phone, User Equipment (UE), a laptop, a notebook, a personal computer, a Personal Digital Assistant (PDA), a Universal Serial Bus (USB) -stick, a tablet computer, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station transceiver can be a wireless interface of a wired network, which enables transmission and reception of radio signals to a UE, mobile transceiver or relay transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc. A relay station transceiver may correspond to an intermediate network node in the communication path between a base station transceiver and a mobile station transceiver. A relay station transceiver may forward a signal received from a mobile transceiver to a base station transceiver, signals received from the base station transceiver to the mobile station transceiver, respectively.

The mobile communication system may be cellular. The term cell refers to a coverage area of radio services provided by a transmission point, a remote unit, a remote head, a remote radio head, a base station transceiver, relay transceiver or a NodeB, an eNodeB, respectively. The terms cell and base station transceiver may be used synonymously. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. Likewise a relay transceiver may establish one or more cells in its coverage area. A mobile transceiver can be registered or associated with at least one cell, i.e. it can be associated to a cell such that data can be exchanged between the network and the mobile in the coverage area of the associated cell using a dedicated channel, link or connection. A mobile transceiver may hence register or be associated with a relay station or base station transceiver directly or indirectly, where an indirect registration or association may be through one or more relay transceivers.

Embodiments of a mobile relay apparatus may improve the cellular coverage in a vehicle. A relay node may be used in order to connect multiple terminals inside of the vehicle and provide an aggregated connection to a stationary cellular communication system via a wireless backhaul link to a stationary cellular communications network, for example, over an external vehicle antenna. In the following the link between a stationary base station and an external antenna of a vehicle relay node will be denoted as relay link; the link between a relay node and end user terminals will be denoted as access link.

Such a relay node may, for example, correspond to a relay as defined in 3^{rd} Generation Partnership Project (3GPP) Release 10, a moving relay as currently discussed in 3GPP Release 12 study groups and in current research literature, a wireless repeater (analog or digital), or a femto cell with a wireless backhaul connection. In case of a femto cell, the wireless backhaul connection could be provided over a separate cellular communication terminal, e.g., a 2G/3G/4G modem. It is another finding that for the relay link and for the access link, respectively, the same or different frequency and spectrum resources can be used.

Note that in the following description of embodiments the term "femto cell" will be used as a synonym for the term "Home eNB" as used in 3GPP standards, for small cells, such as micro, pico, femto cells, etc., as well as relay nodes defined according to 3GPP Release 10 & following releases.

In embodiments the interface 12, 22 may correspond to any interface adapted to or configured for the respective communication or access technology, which may be wireless or wire line communication. An interface may use a certain access technology, protocol, medium, etc. to establish a connection between backhaul modem apparatus 10 and the base station transceiver apparatus 20. As an example, in an embodiment the interfaces 12, 22 may correspond to an Internet Protocol (IP) based communication interface, e.g. a Registered Jack 45 (RJ 45) based connection to exchange information in terms of binary data packets. In embodiments, any other interface is conceivable to establish a connection or communication link between the two apparatuses, be it based on analog or digital communication.

A control module 14, 24 may correspond to one or more control units, one or more control devices, or any means for controlling. In some embodiments a control module 14, 24 may be implemented in software, which is executable on accordingly adapted hardware, such as a processor, a Digital Signal Processor (DSP), a multi-purpose processor, or the like.

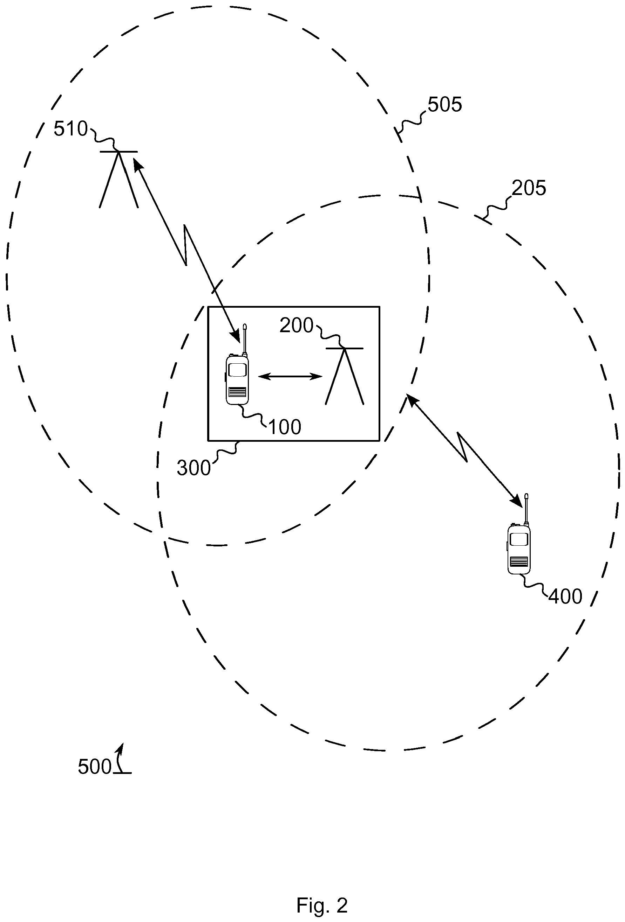

Fig. 2 shows further embodiments in a network scenario. Fig. 2 depicts a base station transceiver 510 of a mobile communication system 500, as already depicted in Fig. 1, which generates a cell or service coverage area 505. In the coverage area 505 there is an embodiment of a relay station transceiver 300. The relay station transceiver 300 may assume the role of a mobile transceiver as backhaul modem 100 towards the mobile communication system 500, its base station transceiver 510, respectively. The relay station transceiver 300 further comprises a base station transceiver 200, which generates another cell or coverage area 205 to communicate with a mobile transceiver 400. Towards the mobile transceiver 400 the relay station transceiver 300 assumes the role of a base station transceiver 200. As indicated in Fig. 2 the relay station transceiver 300 is located in an area in which the coverage areas 505 and 205 overlap, and in particular the backhaul modem 100 resides within the coverage area 205 of the base station transceiver 200. As part of the mobility procedures the backhaul modem 100, much like a mobile transceiver, can be configured to carry out measurements on signals of multiple cells, in order to select such a cell, for example, if the backhaul modem 100 is in an idle mode to maintain accessibility or if the backhaul modem 100 is in an active mode to maintain service continuity through handover.

Here and in the following an idle mode is to be understood as a state of a transceiver or the backhaul modem 100 in which it is associated with a cell of a base station transceiver 510 in terms of a registration, such that the transceiver or backhaul modem 100 can be reached in case of a network originated call. In idle mode the transceiver or backhaul modem 100 is assumed not to have an ongoing communication link to the mobile communication system 500, however, the mobile communication system has information on how to reach the transceiver or backhaul modem 100, for example on a cell level, or on a routing/tracking area or a location area level, which may extend across multiple cells. The mobile communication system 500 may then page the transceiver or modem 100 in case an active connection for data exchange should be established through the said registration level, e.g. a cell or multiple cells of a routing area or location area the transceiver or backhaul modem 100 is camped on. The transceiver or modem 100 may then respond to such paging and establish an active communication link, for example, using according random access procedures, radio link establishment procedures, etc. The transceiver or backhaul modem 100 may then transfer to an active mode, in which a communication or radio link is established and data exchange can be carried out. As the transceiver or backhaul modem moves through the cells of the mobile communication system its location changes and so do the cells, which cover the location of the transceiver or backhaul modem 100. The transceiver or backhaul modem 100 may then re-select cells to associate or register with in idle mode, and associate or handover to different cells in active or connected mode.

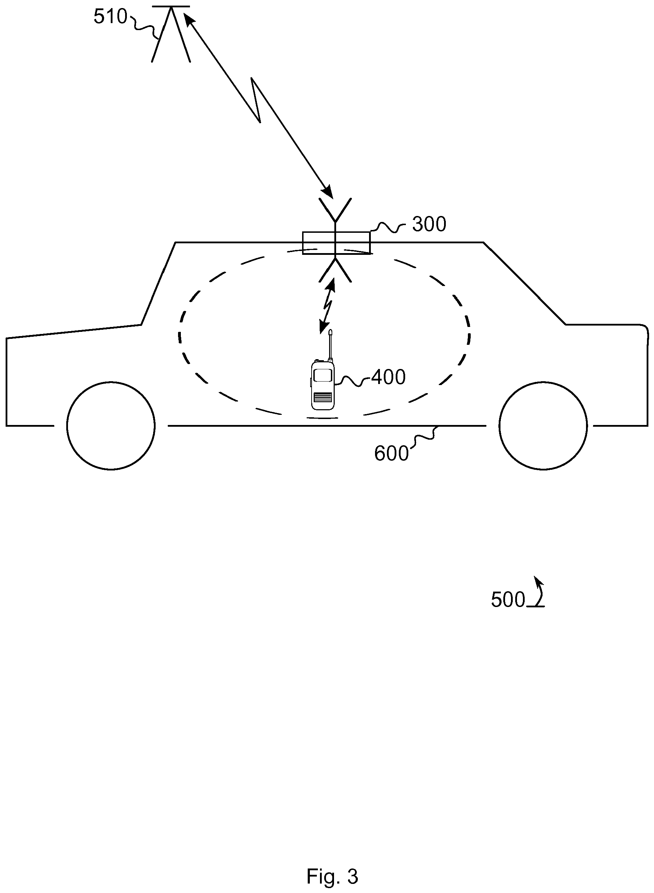

In order to carry out the above described mobility procedures the transceiver or backhaul modem 100 may carry out frequent measurements to determine what cells are available for reselection or handover. The transceiver or backhaul modem 100 may be configured with according measurement configuration information and parameters by the mobile communication system 500. At least some embodiments may relate to mobile relay station transceivers, for example, vehicular cells. Fig. 3 shows an embodiment of a mobile relay station transceiver 300 in a vehicle 600. Much like in the above embodiment described with the help of Fig. 2, the mobile relay station transceiver 300 connects through a base station transceiver 510 to the mobile communication system 500 and assumes a role similar to a mobile transceiver directly communicating with a base station transceiver 510. The inside of the vehicle 600 is covered by a cell generated by the mobile relay station transceiver 300, e.g. a vehicular femto cell to serve mobile transceiver 400 located inside the vehicle 600. Towards the mobile transceiver 400 the mobile relay station transceiver 300 assumes the role of a serving base station transceiver. The vehicle 600 is shown as a car, but can be any vehicle in other embodiments; further examples are buses, trains, ships, planes, etc.

Vehicular cells are small cells residing inside a moving vehicle and connecting to a mobile network 500 for example via an Internet Protocol (IP) link that is transmitted over a Radio Frequency (RF) infrastructure (e.g. base station transceiver 510) such as a 3GPP UMTS or 3GPP LTE network, also named backhaul network or mobile communication system in this specification. Moreover, in the following a vehicular cell corresponds to a cell radiating within the vehicle 600, an external cell corresponds to a cell of a mobile network 500 outside of the vehicle 600 (such as the cell generated by base station transceiver 510), an external base station corresponds to a base station outside of the vehicle 600 (e.g. base station transceiver 510), the backhaul modem 100 corresponds to a device that provides a link to an external base station 510 carrying the backhaul link of the vehicular cell, and a backhaul cell corresponds to a cell of an external base station 510 able to connect the vehicular cell with its serving mobile network 500.

In some embodiments, in which the mobile communication system 500 corresponds to one of the above referenced 3GPP networks, a UE and also the backhaul modem 100, performs cell reselection based on neighbor cell information broadcast in System Information (SI) messages of the serving cell of a mobile network 500. In connected mode a UE receives measurement commands including the neighbor cells to be measured from the Radio Access Network (RAN) 500. Based on the measurement results received from the UE, the RAN 500 initiates handover to neighbor cells. The backhaul modem 100 behaves like a normal UE with respect to the 3GPP mobility procedures. In some embodiments the backhaul modem 100 shall always connect to a cell of the backhaul network 500, which is able to connect the vehicular cell with its serving network. If both the serving network of the vehicular cell and the backhaul network 500 belong to the same Public Land Mobile Network (PLMN) or roaming is allowed between both networks, it might happen that the backhaul modem 100 selects the vehicular cell, because the backhaul cells broadcasts neighbor cell information of the vehicular cell. This broadcast is necessary in order to support mobility with the vehicular cell for users camping on the backhaul network. When the backhaul modem 100 has selected the vehicular cell 200, the backhaul link drops and the vehicular cell 200 will be put out of service. The same issue exists in connected mode, when the RAN sends measurement commands including the vehicular cell.

Embodiments may resolve this issue by influencing the cell selection/reselection process of the backhaul modem 100 by exchanging information between the vehicular cell 200 and the backhaul modem 100. This information could correspond to a blacklist. Generally, there are two mechanisms in embodiments, which will be detailed subsequently. In a first embodiment the control module 14 of the apparatus 10 at the backhaul modem 100 is configured to receive information related to an identification of the at least one cell generated by the base station transceiver 200 from the base station transceiver 200 through the interface 12. Correspondingly, the control module 24 at the base station transceiver apparatus 20 is configured to provide information related to an identification of the at least one cell generated by the base station transceiver 200 to the backhaul modem 100 through the interface 22.

The blacklist may contain information related to cells to be excluded from the cell selection/reselection process, the handover procedure, respectively. In such an embodiment the control module 14 of the backhaul modem 100 is configured to prevent a handover of the backhaul modem 100 to the at least one cell of the base station transceiver 200, and/or the control module 14 of the backhaul modem 100 is configured to prevent a cell reselection of the backhaul modem 100 to the at least one cell of the base station transceiver 200. The at least one cell of the base station transceiver 200 is then identified in the blacklist.

The blacklist can be directly configured in the backhaul modem 100 or the vehicular cell 200 may send the blacklist via the interfaces 12, 22 to the backhaul modem 100. The blacklist can include the connected vehicular cell as well as other cells also not to be used for the backhaul connection (e.g. other vehicular cells). A blacklist entry may, for example, comprise information related to a Radio Access Technology of a cell (RAT), information related to an Absolute Radio Frequency Channel Number of a cell (ARFCN), or information related to a Primary Scrambling Code/ Physical Cell Identity of a cell (PSC/PCI). The backhaul modem 100 then applies the blacklist in idle mode and connected mode.

In embodiments, the information related to the identification may correspond to one or more elements of the group of information related to a cell identification, information related to a radio access technology, information related to an absolute radio frequency channel number, information related to a primary synchronization channel, information related to physical cell identification, information related to a location area identity, information related to a tracking area identity, information related to a routing area identity, information related to a cell global identity, and/or information related to a base station identity code. The control module 14 at the backhaul modem apparatus 10 or the control module 24 at the base station transceiver apparatus 20 may be configured to maintain information related to a blacklist of cells the backhaul modem 100 is prevented from associating with.

In embodiments the backhaul modem 100, its apparatus 10, respectively, may exclude cells matching the conditions in the blacklist from cell selection/reselection. The backhaul modem 100 or its apparatus 10 may exclude cells matching the conditions in the blacklist from measurement reporting in connected mode to prohibit the handover trigger to these cells and the blacklist may be applied for both cell selection/reselection and handover.

In some embodiments, additionally or alternatively the blacklist may comprise information related to the vehicular cell 200, or the base station transceiver apparatus 20, which may send its registration area code (Location Area Identifier (LAI) or Tracking Area Identity (TAI)) to the backhaul modem apparatus 10. The backhaul modem 100 may store the received registration area in the list of forbidden registration areas (list of forbidden location areas for roaming, list of forbidden tracking areas for roaming). This may prohibit or reduce the access of the backhaul modem 100 to the vehicular cell 200 via cell selection/reselection in idle mode and connected mode (if applicable for the RAT). In some embodiments the vehicular cell 200 provides information to the backhaul modem 100 and the backhaul modem 100 prohibits the access to certain cells including the vehicular cell 200 itself. Moreover, some of these identifiers may be re-used, for example, in some embodiments some or even all (mobile) relay station transceivers, their base station transceivers 200, respectively, may use the same identifier or a certain subgroup of identifiers. One such identifier, as identification information, may hence lead to a prevention of an association with multiple cells using the same identifier at least in some embodiments.

Embodiments may increase the availability of the backhaul link and enable a reliable operation of a vehicular cell under changing environmental conditions due to the mobility of the vehicle. Embodiments may allow restricting the establishment of the backhaul link in certain cells of the backhaul network. Embodiments may enable an operator to exclude certain cells, frequencies or RATs from being used as backhaul link for vehicular cells.

In some embodiments, additionally or alternatively, information may be provided from the backhaul modem apparatus 10 to the base station transceiver apparatus 20. The control module 14 of the backhaul modem apparatus 10 may then be configured to provide information related to an identification of the backhaul modem 100 to the base station transceiver 200 through the interface 12. Correspondingly, the control module 24 at the base station transceiver apparatus 20 may then be configured to receive information related to an identification of the backhaul modem 100 from the backhaul modem 100 through the interface 22. In some embodiments the information related to the identification corresponds to one or more elements of the group of information related to an international mobile subscriber identity, information related to an international mobile station equipment identity, information related to a temporary mobile subscriber identity, information related to a packet temporary mobile subscriber identity, and information related to a radio network temporary identifier.

In some embodiments, the base station transceiver apparatus 20 may hence take over control. The control module 24 of the base station transceiver apparatus 20 may then be configured to prevent a handover of the backhaul modem 100 to the at least one cell of the base station transceiver 200. The control module 24 may then be configured to prevent a cell reselection of the backhaul modem 100 to the at least one cell of the base station transceiver 200. In some embodiments the control module 24 may be configured to maintain information related to a blacklist of transceivers the at least one cell is prevented from associating with.

The backhaul modem apparatus 10 may send information to the vehicular cell 200 and the vehicular cell 200 rejects any access attempts of the backhaul modem 100 via its air interface in idle and connected mode. The vehicular cell 200 may be able to identify access attempts of the backhaul modem 100. In order to support this identification the backhaul modem 100 may send the UE identifiers such as an International Mobile Subscriber Identity (IMSI), an International Mobile station Equipment Identity (IMEI), a Temporary Mobile Subscriber Identity (TMSI), a System Architecture Evolution TMSI (S-TMSI), a Packet TMSI (P-TMSI), a Conventional Radio Network Identifier (C-RNTI) and random values used for access to the vehicular cell 100 and updates them if they change or become invalid. It is to be noted that the generation, applicability and administration of many such identifiers are described in the 3GPP specifications. In some embodiments a random value may be generated and used as an identifier, albeit only temporary. Generally such identifier administration is carried out by a Core Network (CN) part of a mobile communication system.

In embodiments the following procedures may be applied to prohibit the access. At the vehicular cell 200:
- The vehicular cell 200 rejects handover requests of the backhaul modem 100.
- The vehicular cell 200 rejects Radio Resource Control (RRC) connection requests of the backhaul modem 100 with a wait time to avoid immediate connection reestablishment attempts.
- The vehicular cell 200 intercepts registration requests and rejects registration attempts of the backhaul modem 100 such that the registration area is added to the list of forbidden registration areas (especially applicable for UMTS).

The different implementation options of the various embodiments may be combined in further embodiments.

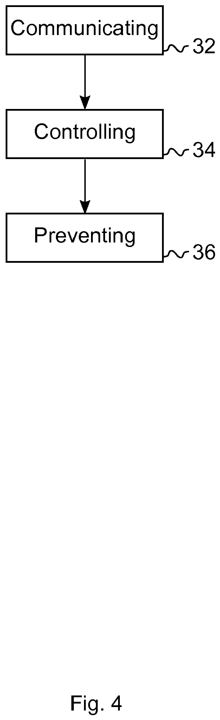

Fig. 4 shows a block diagram of a flow chart of an embodiment of a method for a backhaul modem 100 of a relay station transceiver 300. The relay station transceiver 300 comprises the backhaul modem 100 for communicating with one or more cells of a mobile communication system 500 and a base station transceiver 200 for generating at least one cell of the mobile communication system 500 for communicating with one or more mobile transceivers 400. The method comprises communicating 32 with the base station transceiver 200, and controlling 34 a set of cells of the mobile communication system 500 the backhaul modem 100 associates with. The method further comprises preventing 36 associating with the at least one cell of the base station transceiver 200 by communicating 32 with the base station transceiver 200.

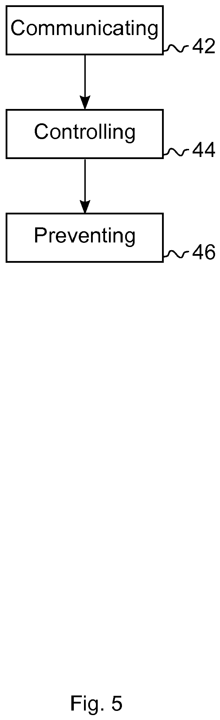

Fig. 5 shows a block diagram of a flow chart of an embodiment of a method for a base station transceiver 200 of a relay station transceiver 300. The relay station transceiver 300 comprises a backhaul modem 100 for communicating with one or more cells of a mobile communication system 500 and the base station transceiver 200 for generating at least one cell of the mobile communication system 500 for communicating with one or more mobile transceivers 400. The method comprises communicating 42 with the backhaul modem 100, and controlling 44 a set of transceivers of the mobile communication system 500 associating with the at least one cell generated by the base station transceiver 200. The method further comprises preventing 46 the at least one cell generated by the base station transceiver 200 from associating with the backhaul modem 100 by communicating 42 with the backhaul modem 100.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", etc., may be provided through the use of dedicated hardware, such as "a controller", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

## Claims

1. An apparatus (10) for a backhaul modem (100) of a relay station transceiver (300), the relay station transceiver (300) comprising the backhaul modem (100) for communicating with a cellular mobile communication system (500) and a base station transceiver (200) for generating at least one cell of the mobile communication system (500) for communicating with one or more mobile transceivers (400), the apparatus (10) comprising
an interface (12) configured to communicate with the base station transceiver (200); and
a control module (14) configured to control a set of cells of the mobile communication system (500) the backhaul modem (100) associates with;
prevent associating with the at least one cell of the base station transceiver (200) by communicating with the base station transceiver (200) using the interface (12),
wherein the control module (14) is configured to receive information related to an identification of the at least one cell generated by the base station transceiver (200) from the base station transceiver (200) through the interface (12), or wherein the control module (14) is configured to provide information related to an identification of the backhaul modem (100) to the base station transceiver (200) through the interface (12).

2. The apparatus (10) of claim 1, wherein the control module (14) is configured to receive the information related to the identification, and wherein the information related to the identification corresponds to one or more elements of the group of information related to a cell identification, information related to a radio access technology, information related to an absolute radio frequency channel number, information related to a primary synchronization channel, information related to physical cell identification, information related to a location area identity, information related to a tracking area, information related to a routing area identity, information related to a cell global identity, and/or information related to a base station identity code.

3. The apparatus (10) of claim 1, wherein the control module (14) is configured to provide the information related to the identification, and wherein the information related to the identification corresponds to one or more elements of the group of information related to an international mobile subscriber identity, information related to an international mobile station equipment identity, information related to a temporary mobile subscriber identity, information related to a packet temporary mobile subscriber identity, and/or information related to a radio network temporary identifier.

4. The apparatus (10) of one of the preceding claims, wherein the control module (14) is configured to prevent a handover of the backhaul modem (100) to the at least one cell of the base station transceiver (200), and/or wherein the control module (14) is configured to prevent a cell reselection of the backhaul modem (100) to the at least one cell of the base station transceiver (200).

5. The apparatus (10) of one of the preceding claims, wherein the control module (14) is configured to maintain information related to a blacklist of cells the backhaul modem (100) is prevented from associating with.

6. An apparatus (20) for a base station transceiver (200) of a relay station transceiver (300), the relay station transceiver (300) comprising a backhaul modem (100) for communicating with a cellular mobile communication system (500) and the base station transceiver (200) for generating at least one cell of the mobile communication system (500) for communicating with one or more mobile transceivers (400), the apparatus (20) comprising
an interface (22) configured to communicate with the backhaul modem (100); and
a control module (24) configured to
control the one or more mobile transceivers (400) of the mobile communication system (500) associating with the at least one cell generated by the base station transceiver (200);
prevent the at least one cell generated by the base station transceiver (200) from associating with the backhaul modem (100) by communicating with the backhaul modem (100) using the interface (12),
wherein the control module (24) is configured to provide information related to an identification of the at least one cell generated by the base station transceiver (200) to the backhaul modem (100) through the interface (22), or wherein the control module (24) is configured to receive information related to an identification of the backhaul modem (100) from the backhaul modem (100) through the interface (22).

7. The apparatus (20) of claim 6, wherein the control module (24) is configured to provide the information related to the identification, and wherein the information related to the identification corresponds to one or more elements of the group of information related to a cell identification, information related to a radio access technology, information related to an absolute radio frequency channel number, information related to a primary synchronization channel, information related to physical cell identification, information related to a location area identity, information related to a tracking area, information related to a routing area identity, information related to a cell global identity, and/or information related to a base station identity code.

8. The apparatus (20) of claim 6, wherein the control module (24) is configured to receive the information related to the identification, and wherein the information related to the identification corresponds to one or more elements of the group of information related to an international mobile subscriber identity, information related to an international mobile station equipment identity, information related to a temporary mobile subscriber identity, information related to a packet temporary mobile subscriber identity, and/or information related to a radio network temporary identifier.

9. The apparatus (20) of one of the claims 6 to 8, wherein the control module (24) is configured to prevent a handover of the backhaul modem (100) to the at least one cell of the base station transceiver (200), and/or wherein the control module (24) is configured to prevent a cell reselection of the backhaul modem (100) to the at least one cell of the base station transceiver (200).

10. The apparatus (20) of one of the claims 6 to 9, wherein the control module (24) is configured to maintain information related to a blacklist of transceivers the at least one cell is prevented from associating with.

11. A method for a backhaul modem (100) of a relay station transceiver (300), the relay station transceiver (300) comprising the backhaul modem (100) for communicating with a cellular mobile communication system (500), and a base station transceiver (200) for generating at least one cell of the mobile communication system (500) for communicating with one or more mobile transceivers (400), the method comprising
communicating (32) with the base station transceiver (200);
controlling (34) a set of cells of the mobile communication system (500) the backhaul modem (100) associates with;
preventing (36) associating with the at least one cell of the base station transceiver (200) by communicating (32) with the base station transceiver (200); and
receiving information related to an identification of the at least one cell generated by the base station transceiver (200) from the base station transceiver (200), or
providing information related to an identification of the backhaul modem (100) to the base station transceiver (200).

12. A method for a base station transceiver (200) of a relay station transceiver (300), the relay station transceiver (300) comprising a backhaul modem (100) for communicating with a cellular mobile communication system (500) and the base station transceiver (200) for generating at least one cell of the mobile communication system (500) for communicating with one or more mobile transceivers (400), the method comprising
communicating (42) with the backhaul modem (100);
controlling (44) the one or more mobile transceivers (400) of the mobile communication system (500) associating with the at least one cell generated by the base station transceiver (200);
preventing (46) the at least one cell generated by the base station transceiver (200) from associating with the backhaul modem (100) by communicating (42) with the backhaul modem (100); and
providing information related to an identification of the at least one cell generated by the base station transceiver (200) to the backhaul modem (100), or
receiving information related to an identification of the backhaul modem (100) from the backhaul modem (100).

13. A computer program having a program code for performing at least one of the methods of claims 11 or 12, when the computer program is executed on a computer, a processor, or a programmable hardware component.

## Patentansprüche

1. Eine Vorrichtung (10) für ein Backhaul-Modem (100) eines Relaisstation-Sendeempfängers (300), der Relaisstation-Sendeempfänger (300) umfassend ein Backhaul-Modem (100) zum Kommunizieren mit einem zellularen Mobilkommunikationssystem (500) und einen Basisstation-Sendeempfänger (200) zum Erzeugen von zumindest einer Zelle des Mobilkommunikationssystems (500) zum Kommunizieren mit einem oder mehreren mobilen Sendeempfängern (400), die Vorrichtung (10) umfassend:
eine Schnittstelle (12), ausgebildet zum Kommunizieren mit dem Basisstation-Sendeempfänger (200); und
ein Steuerungsmodul (14), ausgebildet zum
Steuern eines Satzes von Zellen des Mobilkommunikationssystems (500), dem das Backhaul-Modem (100) zugeordnet ist;
Verhindern des Zuordnens zu der zumindest einen Zelle des Basisstation-Sendeempfängers (200) durch Kommunizieren mit dem Basisstation-Sendeempfänger (200) unter Verwendung der Schnittstelle (12),
wobei das Steuerungsmodul (14) ausgebildet ist, um Informationen bezogen auf eine Identifizierung der zumindest einen Zelle, die durch den Basisstation-Sendeempfänger (200) erzeugt wird, von dem Basisstation-Sendeempfänger (200) durch die Schnittstelle (12) zu empfangen, oder wobei das Steuerungsmodul (14) ausgebildet ist, um Information bezogen auf eine Identifizierung des Backhaul-Modems (100) an den Basisstation-Sendeempfänger (200) durch die Schnittstelle (12) bereitzustellen.

2. Die Vorrichtung (10) gemäß Anspruch 1, wobei das Steuerungsmodul (14) zum Empfangen der Information bezogen auf die Identifizierung ausgebildet ist, und wobei die Information bezogen auf die Identifizierung einem oder mehreren Elementen der Gruppe von Informationen bezogen auf eine Zellen-Identifizierung, Informationen bezogen auf eine Funkzugriffstechnik, Informationen bezogen auf eine absolute Funkfrequenz-Kanalnummer, Informationen bezogen auf einen primären Synchronisierungskanal, Informationen bezogen auf eine Physische-Zelle-Identifizierung, Informationen bezogen auf eine Ortsbereichsidentität, Informationen bezogen auf einen Nachführbereich, Informationen bezogen auf eine Routing-Bereichs-Identität, Informationen bezogen auf eine globale Zellidentität und/oder Informationen bezogen auf einen Basisstations-Identitätscode entspricht.

3. Die Vorrichtung (10) gemäß Anspruch 1, wobei das Steuerungsmodul (16) ausgebildet ist, um Informationen bezogen auf die Identifikation bereitzustellen, und wobei die Informationen bezogen auf die Identifikation einem oder mehreren Elementen der Gruppe von Informationen entsprechen, die sich auf eine Identität eines internationalen mobilen Teilnehmers beziehen, Informationen, die sich auf eine Identität einer internationalen mobilen Stationsausrüstung beziehen, Informationen, die sich auf eine Identität eines temporären mobilen Teilnehmers beziehen, Informationen, die sich auf eine Identität eines Pakets eines temporären mobilen Teilnehmers beziehen und/oder Informationen bezogen auf einen temporären Funknetz-Identifizierer beziehen.

4. Die Vorrichtung (10) gemäß einem der vorangehenden Ansprüche, wobei das Steuerungsmodul (14) ausgebildet ist, um eine Übergabe des Backhaul-Modems (100) an die zumindest eine Zelle des Basisstation-Sendeempfängers (200) zu verhindern, und/oder wobei das Steuerungsmodul (14) ausgebildet ist, um eine Zellen-Reselektion des Backhaul-Modems (100) an die zumindest eine Zelle des Basisstation-Sendeempfängers (200) zu verhindern.

5. Die Vorrichtung (10) gemäß einem der vorangehenden Ansprüche, wobei das Steuerungsmodul (14) ausgebildet ist, um Informationen beizubehalten, die sich auf eine schwarze Liste von Zellen beziehen, von denen verhindert wird, dass das Backhaul-Modem (100) diesen zugeordnet wird.

6. Eine Vorrichtung (20) für einen Basisstation-Sendeempfänger (200) eines Relaisstation-Sendeempfängers (300), der Relaisstation-Sendeempfänger (300) umfassend ein Backhaul-Modem (100) zum Kommunizieren mit einem zellularen Mobilkommunikationssystem (500) und den Basisstation-Sendeempfänger (200) zum Erzeugen von zumindest einer Zelle des Mobilkommunikationssystems (500) zum Kommunizieren mit einem oder mehreren mobilen Sendeempfängern (400), die Vorrichtung (20) umfassend:
eine Schnittstelle (22), ausgebildet zum Kommunizieren mit dem Backhaul-Modem (100); und
ein Steuerungsmodul (24), ausgebildet zum
Steuern des einen oder der mehreren mobilen Sendeempfänger (400) des Mobilkommunikationssystems (500), das der zumindest einen Zelle zugeordnet ist, die durch den Basisstation-Sendeempfänger (200) erzeugt wird;
Verhindern, dass die zumindest eine Zelle, die durch den Basisstation-Sendeempfänger (200) erzeugt wird, dem Backhaul-Modem (100) zugeordnet wird, durch Kommunizieren mit dem Backhaul-Modem (100) unter Verwendung der Schnittstelle (12),
wobei das Steuerungsmodul (24) ausgebildet ist, um Informationen bezogen auf eine Identifizierung der zumindest einen Zelle, die durch den Basisstation-Sendeempfänger (200) erzeugt wird, an das Backhaul-Modem (100) durch die Schnittstelle (22) bereitzustellen, oder wobei das Steuerungsmodul (24) ausgebildet ist, um Information bezogen auf eine Identifizierung des Backhaul-Modems (100) von dem Backhaul-Modem (100) durch die Schnittstelle (22) zu empfangen.

7. Die Vorrichtung (20) gemäß Anspruch 6, wobei das Steuerungsmodul (24) zum Bereitstellen der Information bezogen auf die Identifizierung ausgebildet ist, und wobei die Information bezogen auf die Identifizierung einem oder mehreren Elementen der Gruppe von Informationen bezogen auf eine Zellen-Identifizierung, Informationen bezogen auf eine Funkzugriffstechnik, Informationen bezogen auf eine absolute Funkfrequenz-Kanalnummer, Informationen bezogen auf einen primären Synchronisierungskanal, Informationen bezogen auf eine Physische-Zelle-Identifizierung, Informationen bezogen auf eine Ortsbereichsidentität, Informationen bezogen auf einen Nachführbereich, Informationen bezogen auf eine Routing-Bereichs-Identität, Informationen bezogen auf eine globale Zellidentität und/oder Informationen bezogen auf einen Basisstations-Identitätscode entspricht.

8. Die Vorrichtung (20) gemäß Anspruch 6, wobei das Steuerungsmodul (16) ausgebildet ist, um die Informationen bezogen auf die Identifikation zu empfangen, und wobei die Informationen bezogen auf die Identifikation einem oder mehreren Elementen der Gruppe von Informationen entsprechen, die sich auf eine Identität eines internationalen mobilen Teilnehmers beziehen, Informationen, die sich auf eine Identität einer internationalen mobilen Stationsausrüstung beziehen, Informationen, die sich auf eine Identität eines temporären mobilen Teilnehmers beziehen, Informationen, die sich auf eine Identität eines Pakets eines temporären mobilen Teilnehmers beziehen und/oder Informationen bezogen auf einen temporären Funknetz-Identifizierer beziehen.

9. Die Vorrichtung (20) gemäß einem der Ansprüche 6 bis 8, wobei das Steuerungsmodul (24) ausgebildet ist, um eine Übergabe des Backhaul-Modems (100) an die zumindest eine Zelle des Basisstation-Sendeempfängers (200) zu verhindern, und/oder wobei das Steuerungsmodul (24) ausgebildet ist, um eine Zellen-Reselektion des Backhaul-Modems (100) an die zumindest eine Zelle des Basisstation-Sendeempfängers (200) zu verhindern.

10. Die Vorrichtung (20) gemäß einem der Ansprüche 6 bis 9, wobei das Steuerungsmodul (24) ausgebildet ist, um Informationen beizubehalten, die sich auf eine schwarze Liste von Sendeempfänger beziehen, von denen verhindert wird, dass die zumindest eine Zelle diesen zugeordnet wird.

11. Ein Verfahren für ein Backhaul-Modem (100) eines Relaisstation-Sendeempfängers (300), der Relaisstation-Sendeempfänger (300) umfassend ein Backhaul-Modem (100) zum Kommunizieren mit einem zellularen Mobilkommunikationssystem (500), und einen Basisstation-Sendeempfänger (200) zum Erzeugen von zumindest einer Zelle des Mobilkommunikationssystems (500) zum Kommunizieren mit einem oder mehreren mobilen Sendeempfängern (400), das Verfahren umfassend:
Kommunizieren (32) mit dem Basisstation-Sendeempfänger (200);
Steuern (34) eines Satzes von Zellen des Mobilkommunikationssystems (500), dem das Backhaul-Modem (100) zugeordnet ist;
Verhindern (36) des Zuordnens zu der zumindest einen Zelle des Basisstation-Sendeempfängers (200) durch Kommunizieren (32) mit dem Basisstation-Sendeempfänger (200); und
Empfangen von Informationen bezogen eine Identifizierung der zumindest einen Zelle, die durch den Basisstation-Sendeempfänger (200) erzeugt wird, von dem Basisstation-Sendeempfänger (200), oder
Bereitstellen von Information bezogen auf eine Identifizierung des Backhaul-Modems (100) an den Basisstation-Sendeempfänger (200).

12. Ein Verfahren für einen Basisstation-Sendeempfänger (200) eines Relaisstation-Sendeempfängers (300), der Relaisstation-Sendeempfänger (300) umfassend ein Backhaul-Modem (100) zum Kommunizieren mit einem zellularen Mobilkommunikationssystem (500) und den Basisstation-Sendeempfänger (200) zum Erzeugen von zumindest einer Zelle des Mobilkommunikationssystems (500) zum Kommunizieren mit einem oder mehreren mobilen Sendeempfängern (400), das Verfahren umfassend:
Kommunizieren (42) mit dem Backhaul-Modem (100);
Steuern (44) des einen oder der mehreren mobilen Sendeempfänger (400) des Mobilkommunikationssystems (500), das der zumindest einen Zelle zugeordnet ist, die durch den Basisstation-Sendeempfänger (200) erzeugt wird;
Verhindern (46), dass die zumindest eine Zelle, die durch den Basisstation-Sendeempfänger (200) erzeugt wird, dem Backhaul-Modem (100) zugeordnet wird, durch Kommunizieren (42) mit dem Backhaul-Modem (100); und
Bereitstellen von Informationen bezogen eine Identifizierung der zumindest einen Zelle, die durch den Basisstation-Sendeempfänger (200) erzeugt wird, an das Backhaul-Modem (100), oder
Empfangen von Information bezogen auf eine Identifizierung des Backhaul-Modems (100) von dem Backhaul-Modem (100).

13. Ein Computerprogramm mit einem Programmcode zum Durchführen von zumindest einem der Verfahren gemäß Anspruch 11 oder 12, wenn das Computerprogramm auf einem Computer, einem Prozessor oder einer programmierbaren Hardwarekomponente ausgeführt wird.

## Revendications

1. Appareil (10) pour un modem de backhaul (100) d'un émetteur-récepteur (300) de station de relais, l'émetteur-récepteur (300) de station de relais comprenant le modem de backhaul (100) permettant de communiquer avec un système de communication mobile cellulaire (500) et un émetteur-récepteur (200) de station de base destiné à générer au moins une cellule du système de communication mobile (500) permettant de communiquer avec un ou plusieurs émetteurs-récepteurs mobiles (400), l'appareil (10) comprenant
une interface (12) configurée pour communiquer avec l'émetteur-récepteur (200) de station de base ; et
un module de commande (14) configuré pour
commander un ensemble de cellules du système de communication mobile (500) auquel le modem de backhaul (100) s'associe ;
empêcher une association à l'au moins une cellule de l'émetteur-récepteur (200) de station de base en communiquant avec l'émetteur-récepteur (200) de station de base au moyen de l'interface (12),
le module de commande (14) étant configuré pour recevoir des informations relatives à une identification de l'au moins une cellule générée par l'émetteur-récepteur (200) de station de base en provenance de l'émetteur-récepteur (200) de station de base par le biais de l'interface (12), ou le module de commande (14) étant configuré pour fournir des informations relatives à une identification du modem de backhaul (100) à l'émetteur-récepteur (200) de station de base par le biais de l'interface (12).

2. Appareil (10) selon la revendication 1, dans lequel le module de commande (14) est configuré pour recevoir les informations relatives à l'identification, et dans lequel les informations relatives à l'identification correspondent à un ou plusieurs éléments du groupe constitué par des informations relatives à une identification de cellule, des informations relatives à une technologie d'accès radio, des informations relatives à un numéro de canal radiofréquence absolu, des informations relatives à un canal de synchronisation principal, des informations relatives à une identification de cellule physique, des informations relatives à une identité de zone de localisation, des informations relatives à une zone de poursuite, des informations relatives à une identité de zone de routage, des informations relatives à une identité globale de cellule et/ou des informations relatives à un code d'identité de station de base.

3. Appareil (10) selon la revendication 1, dans lequel le module de commande (14) est configuré pour fournir les informations relatives à l'identification, et dans lequel les informations relatives à l'identification correspondent à un ou plusieurs éléments du groupe constitué par des informations relatives à une identité internationale d'abonné mobile, des informations relatives à une identité internationale d'équipement de station mobile, des informations relatives à une identité temporaire d'abonné mobile, des informations relatives à une identité temporaire d'abonné mobile en mode paquet et/ou des informations relatives à un identificateur temporaire de réseau radio.

4. Appareil (10) selon l'une des revendications précédentes, dans lequel le module de commande (14) est configuré pour empêcher un transfert intercellulaire du modem de backhaul (100) vers l'au moins une cellule de l'émetteur-récepteur (200) de station de base, et/ou dans lequel le module de commande (14) est configuré pour empêcher une resélection de cellule du modem de backhaul (100) vers l'au moins une cellule de l'émetteur-récepteur (200) de station de base.

5. Appareil (10) selon l'une des revendications précédentes, dans lequel le module de commande (14) est configuré pour tenir à jour des informations relatives à une liste noire de cellules auxquelles le modem de backhaul (100) est empêché de s'associer.

6. Appareil (20) pour un émetteur-récepteur (200) de station de base d'un émetteur-récepteur (300) de station de relais, l'émetteur-récepteur (300) de station de relais comprenant un modem de backhaul (100) permettant de communiquer avec un système de communication mobile cellulaire (500) et l'émetteur-récepteur (200) de station de base destiné à générer au moins une cellule du système de communication mobile (500) permettant de communiquer avec un ou plusieurs émetteurs-récepteurs mobiles (400), l'appareil (20) comprenant
une interface (22) configurée pour communiquer avec le modem de backhaul (100) ; et
un module de commande (24) configuré pour
commander le ou les émetteurs-récepteurs mobiles (400) du système de communication mobile (500) s'associant à l'au moins une cellule générée par l'émetteur-récepteur (200) de station de base ;
empêcher l'au moins une cellule générée par l'émetteur-récepteur (200) de station de base de s'associer au modem de backhaul (100) en communiquant avec le modem de backhaul (100) au moyen de l'interface (12),
le module de commande (24) étant configuré pour fournir des informations relatives à une identification de l'au moins une cellule générée par l'émetteur-récepteur (200) de station de base au modem de backhaul (100) par le biais de l'interface (22), ou le module de commande (24) étant configuré pour recevoir des informations relatives à une identification du modem de backhaul (100) en provenance du modem de backhaul (100) par le biais de l'interface (22) .

7. Appareil (20) selon la revendication 6, dans lequel le module de commande (24) est configuré pour fournir les informations relatives à l'identification, et dans lequel les informations relatives à l'identification correspondent à un ou plusieurs éléments du groupe constitué par des informations relatives à une identification de cellule, des informations relatives à une technologie d'accès radio, des informations relatives à un numéro de canal radiofréquence absolu, des informations relatives à un canal de synchronisation principal, des informations relatives à une identification de cellule physique, des informations relatives à une identité de zone de localisation, des informations relatives à une zone de poursuite, des informations relatives à une identité de zone de routage, des informations relatives à une identité globale de cellule et/ou des informations relatives à un code d'identité de station de base.

8. Appareil (20) selon la revendication 6, dans lequel le module de commande (24) est configuré pour recevoir les informations relatives à l'identification, et dans lequel les informations relatives à l'identification correspondent à un ou plusieurs éléments du groupe constitué par des informations relatives à une identité internationale d'abonné mobile, des informations relatives à une identité internationale d'équipement de station mobile, des informations relatives à une identité temporaire d'abonné mobile, des informations relatives à une identité temporaire d'abonné mobile en mode paquet et/ou des informations relatives à un identificateur temporaire de réseau radio.

9. Appareil (20) selon l'une des revendications 6 à 8, dans lequel le module de commande (24) est configuré pour empêcher un transfert intercellulaire du modem de backhaul (100) vers l'au moins une cellule de l'émetteur-récepteur (200) de station de base, et/ou dans lequel le module de commande (24) est configuré pour empêcher une resélection de cellule du modem de backhaul (100) vers l'au moins une cellule de l'émetteur-récepteur (200) de station de base.

10. Appareil (20) selon l'une des revendications 6 à 9, dans lequel le module de commande (24) est configuré pour tenir à jour des informations relatives à une liste noire d'émetteurs-récepteurs auxquels l'au moins une cellule est empêchée de s'associer.

11. Procédé pour un modem de backhaul (100) d'un émetteur-récepteur (300) de station de relais, l'émetteur-récepteur (300) de station de relais comprenant le modem de backhaul (100) permettant de communiquer avec un système de communication mobile cellulaire (500) et un émetteur-récepteur (200) de station de base destiné à générer au moins une cellule du système de communication mobile (500) permettant de communiquer avec un ou plusieurs émetteurs-récepteurs mobiles (400), le procédé comprenant les étapes suivantes
communication (32) avec l'émetteur-récepteur (200) de station de base ;
commande (34) d'un ensemble de cellules du système de communication mobile (500) auxquelles le modem de backhaul (100) s'associe ;
empêchement (36) d'une association à l'au moins une cellule de l'émetteur-récepteur (200) de station de base par communication (32) avec l'émetteur-récepteur (200) de station de base ; et
réception d'informations relatives à une identification de l'au moins une cellule générée par l'émetteur-récepteur (200) de station de base en provenance de l'émetteur-récepteur (200) de station de base, ou
fourniture d'informations relatives à une identification du modem de backhaul (100) à l'émetteur-récepteur (200) de station de base.

12. Procédé pour un émetteur-récepteur (200) de station de base d'un émetteur-récepteur (300) de station de relais, l'émetteur-récepteur (300) de station de relais comprenant un modem de backhaul (100) permettant de communiquer avec un système de communication mobile cellulaire (500) et l'émetteur-récepteur (200) de station de base destiné à générer au moins une cellule du système de communication mobile (500) permettant de communiquer avec un ou plusieurs émetteurs-récepteurs mobiles (400), le procédé comprenant les étapes suivantes
communication (42) avec le modem de backhaul (100) ;
commande (44) du ou des émetteurs-récepteurs mobiles (400) du système de communication mobile (500) s'associant à l'au moins une cellule générée par l'émetteur-récepteur (200) de station de base ;
empêchement (46) de l'au moins une cellule générée par l'émetteur-récepteur (200) de station de base de s'associer au modem de backhaul (100) par communication (42) avec le modem de backhaul (100) ; et
fourniture d'informations relatives à une identification de l'au moins une cellule générée par l'émetteur-récepteur (200) de station de base au modem de backhaul (100), ou
réception d'informations relatives à une identification du modem de backhaul (100) en provenance du modem de backhaul (100).

13. Programme d'ordinateur comprenant un code de programme destiné à mettre en oeuvre au moins un des procédés selon les revendications 11 ou 12, lorsque le programme d'ordinateur est exécuté sur un ordinateur, un processeur ou un composant matériel programmable.
